# EUROPEAN PATENT APPLICATION

(11) **EP 1 487 044 A2**
(43) Date of publication of application: **15.12.2004**
(21) Application number: 04008483.2
(22) Date of filing: 07.04.2004
(51) Int. Cl.: H01M 8/04, H01M 10/42

(54) **Method for detecting possible structural deficiencies of a polymer electrolyte fuel cell**

(30) Priority: 17.04.2003 JP 2003112943
(71) Applicant: MATSUSHITA ELECTRIC INDUSTRIAL CO., LTD., Kadoma-shi, Osaka 571-8501 (JP)
(72) Inventor: Kusakabe, Hiroki, Sakai-shi Osaka 590-0113 (JP); Hatoh, Kazuhito, Osaka-shi Osaka 536-0015 (JP); Ohara, Hideo, Katano-shi Osaka 576-0016 (JP); Takeguchi, Shinsuke, Osaka-shi Osaka 538-0052 (JP); Shibata, Soichi, Hirakata-shi Osaka 573-1149 (JP); Arisaka, Shinichi, Neyagawa-shi Osaka 572-0055 (JP); Takebe, Yasuo, Uji-shi Kyoto 611-0002 (JP)
(74) Representative: Schirdewahn, Jürgen, Dr.

(57) **Abstract**

To realize a polymer electrolyte fuel cell with an increased level of safety by providing a method for easily and accurately detecting a cross leak or a micro short-circuit resulting from the initial failure or the deterioration of durability, specifically, by providing a method for operating a polymer electrolyte fuel cell comprising a stack of unit cells, each of the cells comprising a polymer electrolyte membrane, a pair of electrodes sandwiching the polymer electrolyte membrane, and electroconductive separators, which generates electricity with the supply of a fuel gas containing hydrogen to one of the electrodes and an oxidant gas containing oxygen to the other of the electrodes, in which an electric output of a single cell or a group of cells is checked after the stoppage of the supply of the fuel and oxidant gases to detect a defective cell or a defective group of cells in the fuel cell.

## Description

### BACKGROUND OF THE INVENTION

The present invention relates to a method for operating a polymer electrolyte fuel cell for use in portable power sources, power sources for electric vehicles, home cogeneration systems, etc. More specifically, the present invention relates to a method for detecting a defective cell or a defective group of cells in a fuel cell comprising a stack of cells. In particular the cells can be constructed in a uniform manner or even are combined units.

A polymer electrolyte fuel cell with a polymer electrolyte membrane generates electricity and heat simultaneously through an electrochemical reaction between a fuel gas containing hydrogen and an oxidant gas containing oxygen such as air. In such a polymer electrolyte fuel cell, catalyst layers composed mainly of powdered carbon with a platinum metal catalyst carried on the powder and/or the layer are formed on both faces of a polymer electrolyte membrane which selectively transports hydrogen ions. On the outer face of each catalyst layer is formed a diffusion layer having permeability of the fuel and oxidant gases, respectively, and having electroconductivity. The polymer electrolyte membrane is on either side combined with the diffusion layers and the catalyst layers constituting an electrode each.

Gas sealants such as gaskets are arranged on the periphery of the electrodes such that gaskets sandwich the polymer electrolyte membranes in order to prevent the fuel and oxidant gases to be supplied from leaking outside and from mixing with each other. The gas sealants are combined with the electrodes and the polymer electrolyte membrane to form one unit. This combination of the polymer electrolyte membrane, the electrodes and the gas sealants is called "MEA" (membrane electrode assembly). On the outer faces of the MEA are arranged electroconductive separators for mechanically affixing the MEA and for electrically interconnecting adjacent MEAs with each other in series. The separator has gas channel means, as for instance one or more gas channel, for supplying the fuel and oxidant gases to the electrodes and for removing a generated gas and a surplus gas on the portion thereof in contact with the MEA. The gas channel means may be provided independently of the separator, but usually grooves are formed on the surface of the separator to serve as gas channels.

In order to supply the fuel and oxidant gases to the grooves, apertures are formed in the separator having gas channels formed thereon, and the gas channels are connected to the apertures from which the fuel and oxidant gases are directly supplied, respectively. The aperture for supplying the fuel or oxidant gas to each gas channel is called "manifold aperture".

The polymer electrolyte fuel cell generates heat during its operation so that it is necessary to cool the cell using cooling water to maintain the cell in the proper cell temperature range. Cooling units for flowing cooling water are usually provided every 1 to 3 cells between separators. Typically, a cooling water channel is formed on the back of the separator to serve as a cooling unit. In this case, the separator is required to have manifold apertures for conveying cooling water to the cooling water channels.

A stack formed by stacking 10 to 200 cells, each cell comprising the MEA, the separators and possibly a cooling unit, is typically sandwiched by use of current collector plates, insulating plates and end plates in this order, which is then fixed by inserting bolts therethrough to give a polymer electrolyte fuel cell.

The end plate has inlets respectively corresponding to the manifold apertures for the fuel gas, for the oxidant gas and for cooling water formed therein, through which the fuel gas, the oxidant gas and cooling water are supplied and removed.

Conventional polymer electrolyte fuel cells as described above, however, have the problem of a cross leak. Specifically, the fuel gas leaks out to the oxidant-gas-side electrode (oxidant electrode), or the oxidant gas leaks out to the fuel-gas-side electrode (fuel electrode) due to the occurrence of pinholes resulting from an initial failure, a deterioration of durability, etc of a polymer electrolyte membrane and a defect of a gasket, etc. The leaking fuel gas directly reacts with the oxidant gas on the catalyst of the oxidant-gas-side electrode. If such condition is maintained for a long period of time, pinholes are enlarged by local generation of heat resulting from the reaction. Finally, the fuel gas burns fiercely, leading to the possibility of bringing the whole fuel cell into a dangerous condition.

In an electrode of the above-described polymer conventional electrolyte fuel cell, a thin polymer electrolyte membrane is sandwiched by catalyst layers and diffusion layers. Because of such structure, carbon fibers may be embedded in the polymer electrolyte membrane in the portion where a local pressure is applied, thereby creating the possibility of causing a micro short-circuit. In the portion where a micro short-circuit occurs, a minute amount of current flows. Although it does not harm regular electricity generation performance, it generates heat so that long-term use could develop pinholes, creating the possibility of the aforesaid problems.

In order to address the above problems, Japanese Laid-Open Patent Publication No. 2000-58095 discloses a method for detecting a deteriorated defective cell, which in practice, however, has shown not to solve the above-mentioned problems.

### BRIEF SUMMARY OF THE INVENTION

In view of the aforesaid problems, an object of the present invention is to realize safe operation of a polymer electrolyte fuel cell by providing for an efficient and practical method and apparatus for performing such method. In particular it is intended to detect the existence or during normal operation the development of structural deficiencies as for instance caused by an initial failure and/or failure during normal operation. In both cases durability may be affected. Possible structural deficiencies may be a cross leak caused by pinholes, a micro short-circuit or the like.

This object is attained by the features of claim 1 concerning the method, and by the features of claim 9 concerning the apparatus. The other claims concern preferred developments of the invention.

The detection of structural deficiencies in accordance with the invention should not be confused with the detection of poisons or poisoning caused by deposition, absorption or adsorption of substances inhibiting the operation of the fuel cell. Such substances may be either gases as for instance carbon monoxide poisoning the catalyst or even accumulating water resulting in flooding of the cell. It is known to clean the fuel cell from such substances by periodical starvation at either or both electrodes. As described more in detail in the US 6 096 448 and US 6 472 090 B1 it is intended not to interrupt the ordinary operation of the fuel cell when using such starvation technique. Starvation technique is known as well for preheating a fuel cell before start of operation (EP 1 194 969 B1). Such starvation technique already includes the possibility of stopping the supply of fuel gas or oxidant gas completely and even replacing it by supply of inert gases as nitrogen for instance.

The detection of the electrical output can be made on the basis of measuring the electrical current between the electrodes of the cells concerned. Special emphasis, however, is given on the detection of the change of the voltage difference between the mentioned electrodes.

Details of the subclaims will become more clear form the examples described later.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a diagram illustrating the structure of a polymer electrolyte fuel cell produced in an example of the present invention.
FIG. 2 is a top plan view illustrating the structure of a separator used in an example of the present invention.
FIG. 3 is a graph indicating the voltage behavior of a polymer electrolyte fuel cell of EXAMPLE 1 of the present invention.
FIG. 4 is a graph indicating the behavior of the voltage difference between normal cells and a cell developing pinholes in a polymer electrolyte fuel cell of EXAMPLE 1 of the present invention.
FIG. 5 is a graph indicating the voltage behavior of a polymer electrolyte fuel cell of EXAMPLE 2 of the present invention.
FIG. 6 is a graph indicating the behavior of the voltage difference between normal cells and a cell developing pinholes in a polymer electrolyte fuel cell of EXAMPLE 2 of the present invention.
FIG. 7 is a graph indicating the voltage behaviors of normal cells and a cell developing pinholes in a polymer electrolyte fuel cell of the present invention.
FIG. 8 is a graph indicating the voltage behaviors of normal cells and a cell developing pinholes in a polymer electrolyte fuel cell of the present invention.
FIG. 9 is a graph indicating the voltage behaviors of normal cells and a cell developing pinholes in a polymer electrolyte fuel cell of the present invention.
FIG. 10 is a graph indicating the voltage behaviors of normal cells and a cell developing pinholes in a polymer electrolyte fuel cell of the present invention.
FIG. 11 is a graph indicating the voltage behaviors of normal cells and a cell developing pinholes in a polymer electrolyte fuel cell of the present invention.
FIG. 12 is a graph indicating the voltage behaviors of normal cells and a cell developing pinholes in a polymer electrolyte fuel cell of the present invention.

### DETAILED DESCRIPTION OF THE INVENTION

The present invention focused on the fact that, when one or more defective cell(s) developing a cross leak or a micro short-circuit is or are present in a fuel cell comprising a stack of cells, the voltage of a defective cell or more of them drops extremely rapidly after the stoppage of the supply of a fuel gas and an oxidant gas compared with normal or fully operative cells. On the basis of the above, the method of the invention can accurately detect the occurrence of structural deficiencies like a cross leak or a micro short-circuit.

More specifically, the present invention is related to a method for operating a polymer electrolyte fuel cell comprising a stack of unit cells, each of the cells comprising a polymer electrolyte membrane, a pair of electrodes sandwiching the polymer electrolyte membrane, and electroconductive separators, which generates electricity with the supply of a fuel gas containing hydrogen to one of the electrodes and an oxidant gas containing oxygen to the other of the electrodes. The method is characterized by checking an electric output of an individual cell or a group of the cells after the stoppage of the supply of the fuel and oxidant gases so as to detect a defective individual cell or a defective group of cells in the fuel cell.

The main point of the present invention is to check the voltage or the current or the change per time of the voltage or the current of an individual cell or of a group of cells. Therefore, the cell may have any structure. Likewise, there is no specific limitation on the number of the cells to be contained in the group of cells. In other words, the group of cells may have any number of cells.

In a preferred embodiment, an inert gas or the like is supplied, instead of the fuel gas, after the stoppage of the supply of the fuel gas, during which the voltage or the like of the cell(s) is checked and then a defective cell(s) in the fuel cell is detected. This is based on the fact that a cell(s) having a cross leak or a micro short-circuit consumes hydrogen and oxygen faster than normal cells. Thereby, a minute leak or micro short-circuit that would otherwise be unobservable during normal operation can be detected.

Examples of the inert gas include nitrogen gas, argon gas, helium gas, etc. Among them preferred is nitrogen gas because it is relatively easily obtainable.

The amount of the inert gas to be supplied is in the range of 5 to 30 liter/min. Preferably, the flow rate is adjusted such that a pressure loss becomes constant in order to limit the pressure applied to the MEAs during operation.

Further, it is preferred to detect a defective cell(s) in the fuel cell by checking whether the voltage value of the cell(s) is not greater than a predetermined voltage value. In other words, it is effective to detect a defective cell(s) in the fuel cell by checking whether the voltage value of the cell(s) measured after a previously-determined period of time (predetermined time) after the stoppage of the supply of the fuel and oxidant gases or after the start of the supply of the inert gas is not greater than a previously-determined threshold value (predetermined value). This is based on the fact that the voltage of a cell(s) with a cross leak or a micro short-circuit drops rapidly, particularly, the difference between normal cells and a cell or more of them with a cross leak or a micro short-circuit observed at a specific time period is remarkable. The preferred time period and threshold value will be described later in EXAMPLES.

The inert gas may be supplied to both the fuel and oxidant electrodes in the cells constituting a fuel cell. Alternatively, it may be supplied to either the fuel or oxidant electrode. In a practical system, the inert gas is preferably supplied only to the fuel electrode from a safety standpoint because the fuel electrode is purged with an inert gas every time the operation of a fuel cell is stopped.

To measure the voltage, there can be used a multichannel analyzer, comprising a data logger and a multichannel AD converter board. An example of the multichannel data logger is Agilent 34970 A, manufactured by Agilent Technologies Corporation. An example of the multichannel AD converter board is NA98-0164 manufactured by NATEC Corp. A voltage value measured is entered into a control computer (control unit), which is then compared to the threshold value having previously been determined and stored in the computer.

In the following, the present invention is described in further detail by way of example with reference to the accompanying drawings, but it is to be understood that the present invention is not limited to them.

### EXAMPLE 1

First of all, a first catalyst body (50 wt% of platinum) serving as the oxidant-electrode-side catalyst was prepared by allowing Ketjen Black EC (conductive carbon particles having a mean primary particle size of 30 nm and being manufactured by AKZO Chemie Company of the Netherlands) to carry platinum particles with a mean particle size of 30 Å. A second catalyst body (25 wt% of platinum and 25 wt% of ruthenium) serving as the fuel-electrode-side catalyst was prepared by allowing Ketjen Black EC to carry platinum particles and ruthenium particles with a mean particle size of 30 Å.

A dispersion obtained by dispersing the first catalyst body in isopropanol was mixed with a dispersion (Flemion FSS-1, manufactured by Asashi Glass Co., Ltd.) obtained by dispersing powdered perfluorocarbon sulfonic acid in ethyl alcohol to give a first paste. The obtained first paste was applied on one side of a carbon non-woven fabric with a thickness of 250 µ m by a screen-printing technique to form a catalyst layer, and an electrode (oxidant-electrode) was produced. The amounts of the platinum and the perfluorocarbon sulfonic acid contained in the catalyst layer of the produced electrode were adjusted to be 0.5 mg/cm² and 1.2 mg/cm², respectively.

Likewise, a dispersion obtained by dispersing the second catalyst body in isopropanol was mixed with a dispersion obtained by dispersing powdered perfluorocarbon sulfonic acid in ethyl alcohol to give a second paste. The obtained second paste was applied on one side of a non-woven carbon cloth or fabric (TGP-H-090, manufactured by Toray Industries, Inc.) with a thickness of 250 µm by a screen-printing technique to form a catalyst layer, and an electrode (fuel-electrode) was produced. Similar to the above, the amounts of the platinum and the perfluorocarbon sulfonic acid contained in the catalyst layer of the produced electrode were adjusted to be 0.5 mg/cm² and 1.2 mg/cm², respectively.

Then, a proton-conductive polymer electrolyte membrane with a dimension one size larger than the above-obtained fuel and oxidant electrodes was interposed between the fuel and oxidant electrodes produced above such that the fuel and oxidant electrodes were positioned at the center of the proton-conductive polymer electrolyte membrane, the whole of which was then hot-pressed so that the catalyst layer and the polymer electrolyte membrane were thoroughly attached. The proton-conductive polymer electrolyte membrane used in this example was a membrane obtained by forming perfluorocarbon sulfonic acid into a thin film (Nation 112, manufactured by E. I. Du Pont de Nemours & Co. Inc. of the United States). The peripheral portion of the polymer electrolyte membrane which is not covered with the fuel or oxidant electrode was sandwiched between gaskets (manufactured by NOK Corporation, composed of a fluorinated rubber) punched into the same shape as the separator described below, which was then hot-pressed (for 10 minutes at 120 °C with 2.5 Mpa) to give an MEA (membrane electrode assembly).

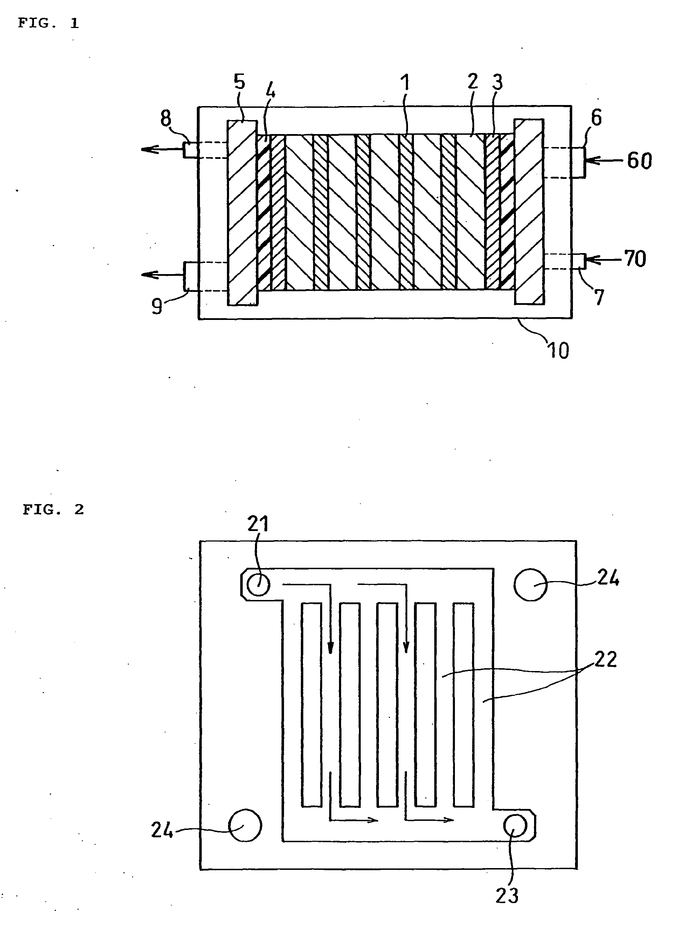

The structure of the polymer electrolyte fuel cell produced in this example is shown in FIG. 1. As seen in FIG. 1, a polymer electrolyte fuel cell 10 was constructed by sandwiching a stack cell formed by alternately stacking MEA 1 and separator 2 (manufactured by Tokai Carbon Co., Ltd., composed mainly of conductive carbon) by current collector plates (Au-plated copper plates) 3, insulating plates (made of polyphenylene sulfide) 4 and end plates (made of JIS-code SUS 316) 5 in this order, which was then clamped by a predetermined pressure of 1000 kgf applied onto a total area of 430 cm². In one of the end plates 5 were formed an oxidant gas manifold aperture inlet 6 for supplying an oxidant gas 60 from an external gas supplying device (not shown in the figure) and a fuel gas manifold aperture inlet 7 for supplying a fuel gas from the same. In the other of the end plates were formed a fuel gas manifold aperture outlet 8 for removing the oxidant gas 60 and an oxidant gas manifold aperture outlet 9 for removing the fuel gas 70. These inlets and outlets had a tube-like shape.

FIG. 2 shows a top plan view of the separator 2 used in this example. On the separator 2 were provided an inlet manifold aperture 21 for introducing a gas supplied from the oxidant gas manifold aperture inlet 6 or the fuel gas manifold aperture inlet 7 shown in FIG. 1, a gas channel 22 being connected to the inlet manifold aperture 21, and an outlet manifold aperture 23 for removing the gas having passed through the gas channel 22. Manifold apertures 24 for cooling water were also formed thereon.

The fuel cell of this example had 50 such cells stacked.

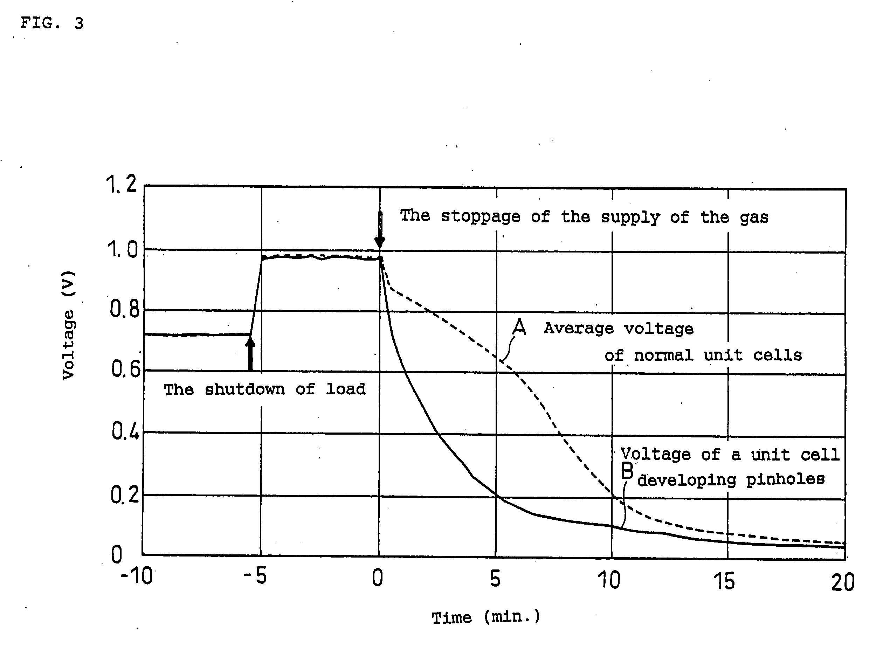

Next, the performance of the polymer electrolyte fuel cell of this example and its voltage behavior after the stoppage of the supply of the fuel and oxidant gases were observed (measured) . The results are shown in FIG. 3. In the observation, a simulated reformed gas (80% by volume of hydrogen, 20% by volume of carbon dioxide and 50 ppm of carbon monoxide) was used as the fuel gas, and air was used as the oxidant gas. The observation was performed under a hydrogen utilization rate of 80%, an oxygen utilization rate(the power generation of fuel cells depends on the chemical reaction of H₂ + ½ O₂ → H₂O; if all of the supplied H₂ is reacted, the utilazation ratio is 100%; in general, however, about 30% of the supplied H₂ is non-reacted and discharged because of various reasons) of 50%, a bubble temperature for humidifying hydrogen of 75°C, a bubble temperature for humidifying air of 50°C, a battery temperature of 75°C, and a current density of 0.3 A/cm².

The fuel cell was first operated under the above conditions. Then, the load was shut down to stop the supply of the fuel and oxidant gases, and the manifold aperture inlets and outlets for fuel and oxidant gases were closed. The voltage decrease of the fuel cell was plotted in the graph of FIG. 3. FIG. 3 shows the average voltage of normal cells and the voltage of a cell developing a cross leak. After the load current was shut down, each of the cells showed an open-circuit voltage, but the voltage started to decrease gradually right after the supply of hydrogen was stopped and the inlets and outlets were closed, and fell to below 0.1 V for about 20 minutes.

As is apparent from FIG. 3, a cell having pinholes had a faster decreasing rate than normal cells. This is because a cross leak between the fuel and oxidant gases occurred at pinholes so that the consumption of the fuel gas remaining around MEAs was accelerated. Similar result was obtained in the case of a cell developing a micro short-circuit. In this case also, it is considered that the consumption of residual hydrogen was accelerated due to very low currents.

Therefore, the occurrence of a cross leak or a micro short-circuit can be easily and accurately detected by checking the decreasing rate of the voltage of cells after the stoppage of the supply of the fuel and oxidant gases. When a cell(s) had a voltage value of not greater than a predetermined value measured after a given period of time after the stoppage of the supply of hydrogen, the cell(s) was determined as a cell(s) developing pinholes or a micro short-circuit.

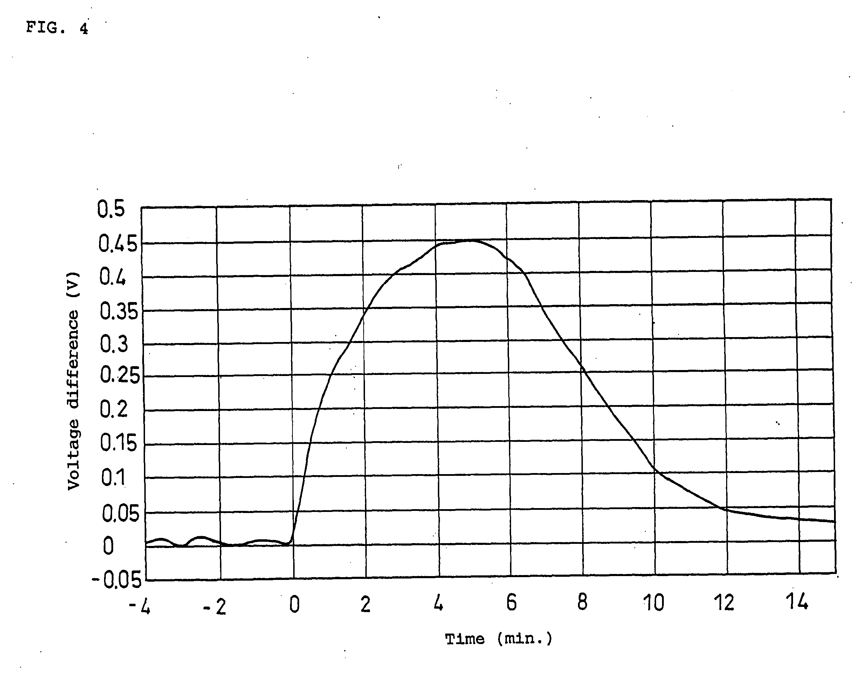

FIG. 4 shows a graph of the voltage difference between the average voltage of normal cells and the voltage of the cell developing pinholes versus time. In order to detect a cell developing pinholes with high precision, the judgment is preferably made based on the time period when the voltage difference between normal cells and the cell developing pinholes is significant. As is obvious from FIG. 4, it is about after 5 minutes after the stoppage of the supply of the fuel gas when the greatest voltage difference was observed.

Accordingly, in this example, a voltage value of 0.4 V observed after 5 minutes after the stoppage of the supply of the fuel and oxidant gases was used as the threshold value of electric output (predetermined value). It can be seen from the voltage behaviors in FIGS. 3 and 4 that the predetermined time is preferably in the range of 2 to 7 minutes and the predetermined voltage value is preferably set to between 0.7 V and 0.2 V. This is because the difference between normal and abnormal voltages is likely to be clearly detected in these ranges.

This enables a practical cogeneration system to generate an alarm upon detection of a cell developing pinholes as described above, and to inform the user that maintenance is required. In this example, the method was used in an actual operating fuel cell, but it is to be noted that this method is also applicable for use for shipping inspection immediately after the assembly of a fuel cell.

### EXAMPLE 2

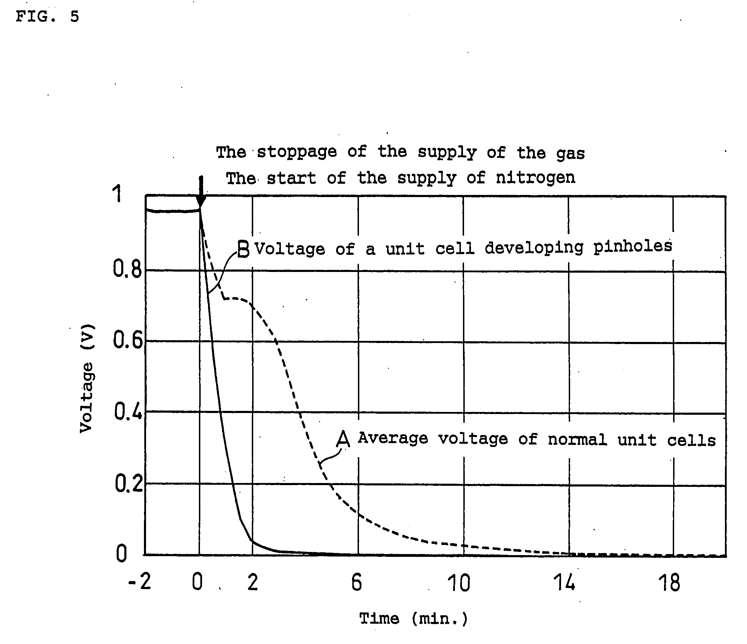

FIG. 5 shows the voltage behavior of the polymer electrolyte fuel cell of this example. This example employed a fuel cell analogous to the one used in EXAMPLE 1, and nitrogen gas was fed into the fuel electrode as the inert gas after the stoppage of the supply of the fuel and oxidant gases to the fuel cell. Similar to EXAMPLE 1, the voltage behavior of a cell with a cross leak and the average voltage of normal cells were shown in FIG. 5.

Compared to the case where nitrogen gas was not fed, the voltages of both cells rapidly dropped to not greater than 0.1 V within 10 minutes. From this, it is apparent that hydrogen was forced to be removed by nitrogen gas and thereby the voltage reduction was accelerated. Accordingly, the use of nitrogen gas advances the detection time of a cell developing a cross leak or pinholes to about half the time, compared to the case where nitrogen gas was not fed.

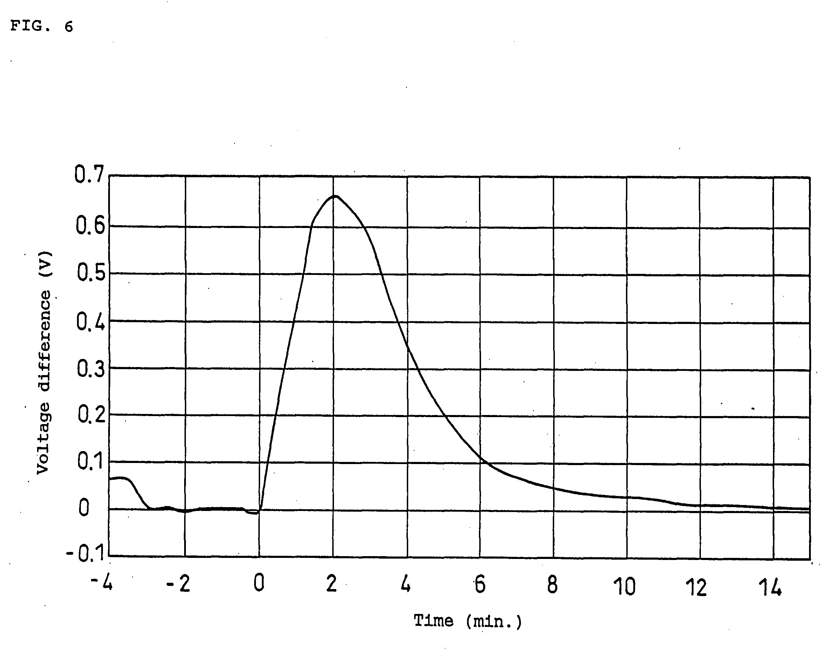

FIG. 6 shows a graph of the voltage difference between the average voltage of normal cells and the voltage of the cell developing pinholes versus time. As is clear from FIG. 6, the greatest voltage difference was observed about 2 minutes after the start of the supply of nitrogen gas. Accordingly, a voltage value of 0.4 V observed after 2 minutes after the start of the supply of nitrogen gas was used as the threshold value in this example. It can be seen from the voltage behaviors in FIGs. 5 and 6 that the predetermined time is preferably in the range of 1 to 4 minutes and the threshold voltage value is preferably set to between 0.6 V and 0.2 V.

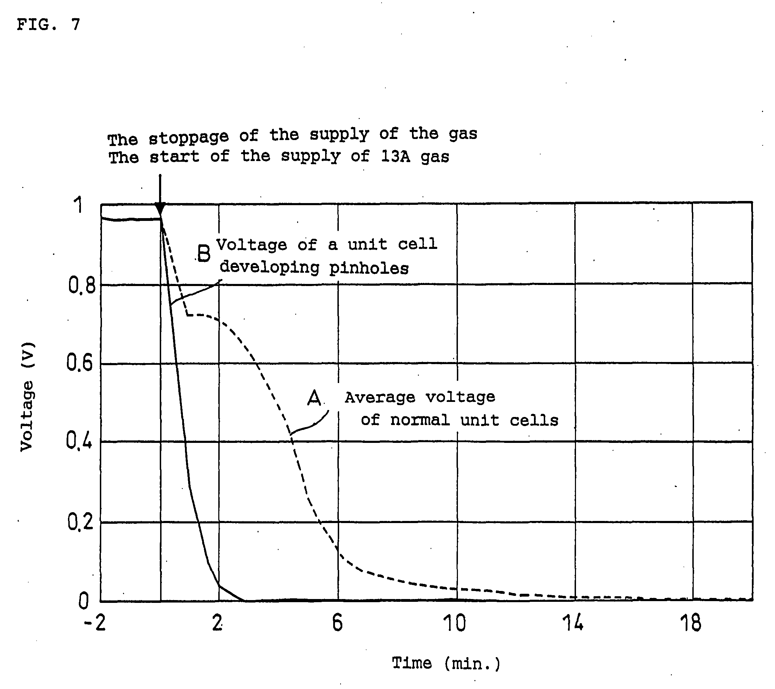

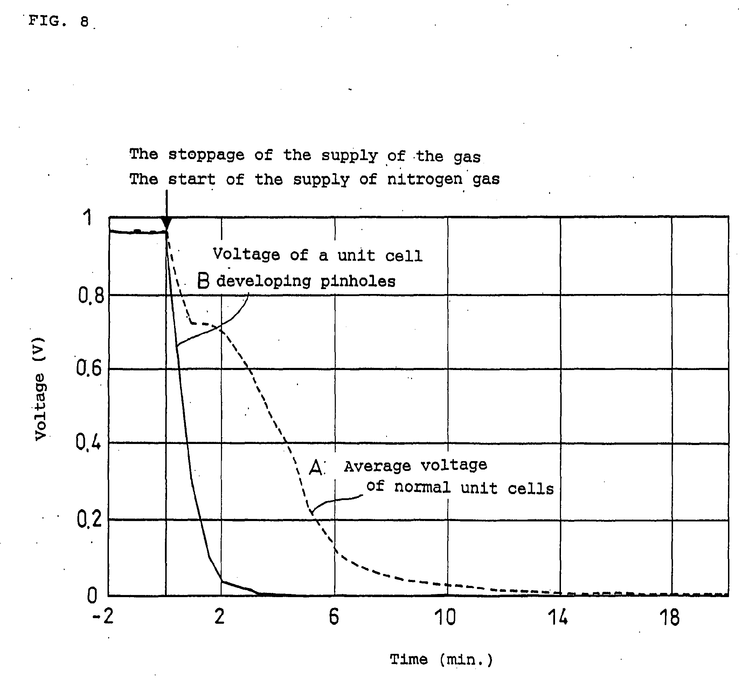

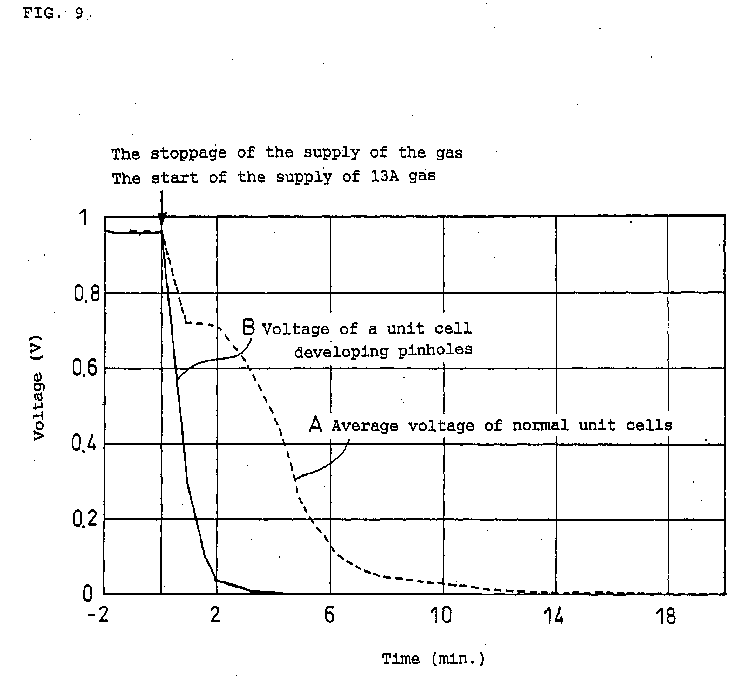

FIG. 7 shows the voltage behavior when town gas (13A) composed mainly of methane gas was fed into the fuel electrode after the stoppage of the supply of the fuel and oxidant gases. FIG. 8 shows the voltage behavior when nitrogen gas was fed into the oxidant electrode after the stoppage of the supply of the fuel and oxidant gases. FIG. 9 shows the voltage behavior when town gas was fed into the oxidant electrode after the stoppage of the supply of the fuel and oxidant gases.

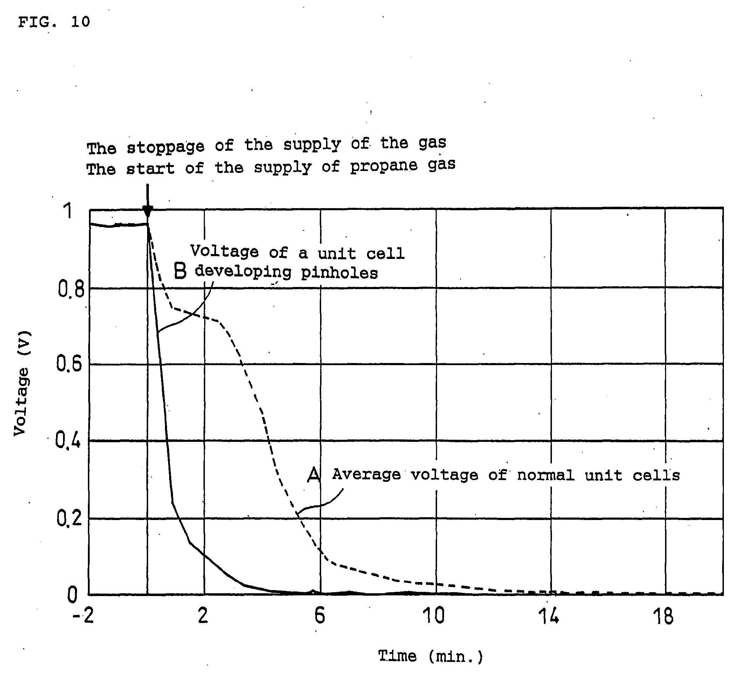

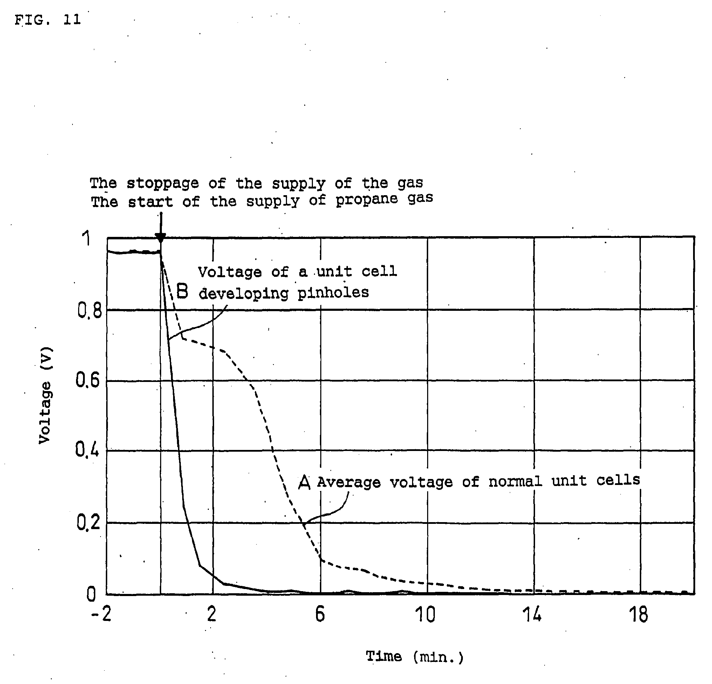

FIG. 10 shows the voltage behavior when propane gas was fed into the oxidant electrode after the stoppage of the supply of the fuel and oxidant gases. FIG. 11 shows the voltage behavior when propane gas was fed into the fuel electrode after the stoppage of the supply of the fuel and oxidant gases. The behaviors indicated in the above graphs were very much similar to that of FIG. 5 of EXAMPLE 2. This proves that, other than nitrogen gas, helium gas or argon gas can be used as the inert gas.

Similar results were also obtained in the case of a cell developing a micro short-circuit, which has made it clear that this method is also effective in detecting a cell developing a micro short-circuit.

### EXAMPLE 3

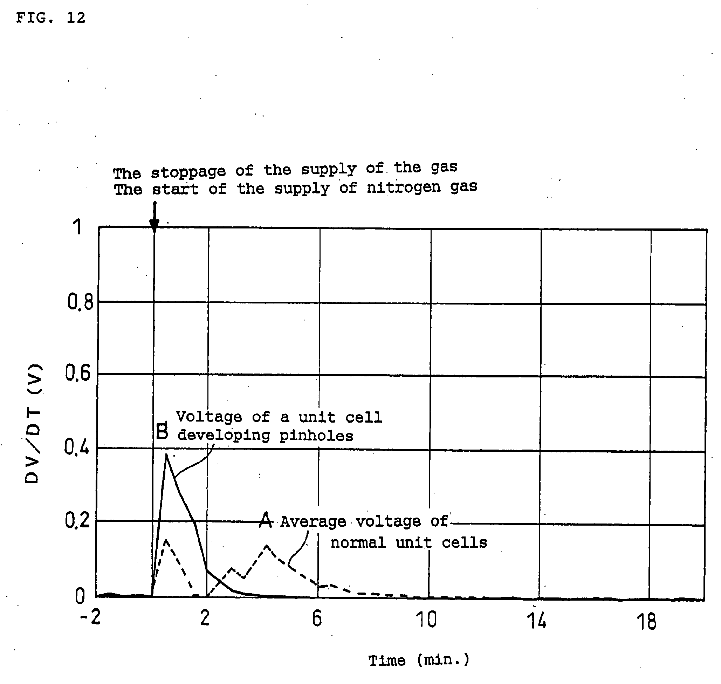

The voltage behavior of the polymer electrolyte fuel cell of this example is shown in FIG. 12. This example employed a fuel cell analogous to the one used in EXAMPLE 1, and nitrogen gas was fed into the fuel electrode as the inert gas after the stoppage of the supply of the fuel and oxidant gases. The voltage change per time (dV/dT) of cell under the above condition versus time was shown in FIG. 12. The voltage change was plotted every 30 seconds.

As is clear from FIG. 12, the voltage change of the defective cell was obviously larger that that of normal cells. This has proved that a cell developing pinholes or a micro short-circuit can be detected also by checking the voltage change per time.

EXAMPLE 4 This example employed a fuel cell analogous to the one used in EXAMPLE 1, and nitrogen gas was fed into the fuel electrode as the inert gas after the stoppage of the supply of the fuel and oxidant gases, during which if a cell(s) having a voltage of not greater than a predetermined value was found, the cell(s) was identified as defective. The predetermined value was investigated.

Example 4 differs from Example 3 only in that the discrimination is based on the voltage change per time instead of the voltage behavior with respect to the voltage threshold and does not need description by a separate Figure.

### GENERAL REMARKS

The voltage of a fuel cell usually means a difference between the absolute potential of the fuel electrode and that of the oxidant electrode. When no current is flowing, the potential of the fuel electrode is about 0 V and that of the oxidant electrode is about 1 V. The reason that the cell voltage drops after the stoppage of the supply of the fuel gas to the fuel cell or after the start of the supply of an inert gas or town gas to the fuel electrode is because the potential of the fuel electrode increases and approaches that of the oxidant electrode.

When the potential of the fuel electrode increases and reaches not less than about 0.5 V, for example, it is known that ruthenium, which is used as the metal catalyst in the fuel electrode, starts to melt. Accordingly, when the potential of the fuel electrode increases and the cell voltage drops to less than 0.5 V, the catalyst is very likely to be degraded.

The above indicates that the threshold voltage value for determining whether the cell(s) is defective or not is preferably not less than 0.5 V, in order to detect a defective cell developing pinholes or a micro short-circuit without causing any damage to normal cells.

According to the present invention, when a defective cell(s) developing a cross leak or a micro short-circuit is present in a fuel cell comprising a stack of cells, it is possible to easily and accurately detect the occurrence of a cross leak or a micro short-circuit by making use of the fact that the voltage of a defective cell(s) drops extremely rapidly after the stoppage of the supply of the fuel gas compared to normal cells. Thereby, a cogeneration system can generate an alarm to inform the user that maintenance is required, leading to a great improvement in safety during actual operation. The method in accordance with the present invention is also applicable for use for shipping inspection of a produced fuel cell.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the scope of the invention.

## Claims

**1.** A method for detecting possible structural deficiencies of a polymer electrolyte fuel cell comprising a stack of unit cells, each of said cells comprising a polymer electrolyte membrane, a pair of electrodes sandwiching said polymer electrolyte membrane, and electroconductive separators, for generating electricity by supply of a fuel gas containing hydrogen to one of said electrodes and an oxidant gas containing oxygen to the other of said electrodes,
said method comprising the following steps:
creating operational conditions by supplying said fuel gas and said oxidant gas to the respective electrodes;
stopping said supply;
measuring an electric output of said an individual cell or a group of cells;
discriminating said individual cell or group of cells with respect to a possible deficiency on the basis of said electrical output.

**2.** The method in accordance with claim 1, for use as quality check, before shipping for instance.

**3.** The method in accordance with claim 1, for use during normal operation.

**4.** The method in accordance with claim 3, wherein said discrimination is repeated from time to time during operation of the fuel cell.

**5.** The method in accordance with one of claims 1 to 4, for measuring and discriminating all cells of the stack simultaneously or sequentially.

**6.** The method in accordance with any one of claims 1 to 5, wherein after stopping the supply an inert gas or a raw material gas containing methane gas or propane gas to at least one of said electrodes is supplied, and during said supply the discrimination takes place.

**6.** The method in accordance with one of claims 1 to 5, wherein the discrimination takes place on the basis of a change per time of said electric output.

**7.** The method in accordance with any one of claims claim 1 to 5, wherein said basis of said electrical output is a predetermined voltage threshold of the decrease of the electrical output.

**8.** The method in accordance with claim 7, wherein said voltage threshold is a voltage value at which a metal catalyst of an electrode to be supplied with fuel gas starts to melt.

**9.** A polymer electrolyte fuel cell comprising a stack of unit cells, each of said cells comprising a polymer electrolyte membrane, a pair of electrodes sandwiching said polymer electrolyte membrane, and electroconductive separators, for generating electricity by supply of a fuel gas containing hydrogen to one of said electrodes and an oxidant gas containing oxygen to the other of said electrodes,
wherein said fuel cell further comprises a control unit adapted for performing the method according to one of claims 1 to 8.

**10.** The polymer electrolyte fuel cell according to claim 9, wherein the control unit comprises a multichannel analyzer.
